# EUROPÄISCHE PATENTSCHRIFT

(11) **EP 0 669 902 B1**
(45) Veröffentlichungstag und Bekanntmachung des Hinweises auf die Patenterteilung: **02.05.1997**
(21) Anmeldenummer: 94927592.9
(22) Anmeldetag: 08.09.1994
(51) Int. Cl.: C04B 37/02, B23K 35/00

(54) **THERMISCH HOCH BELASTBARES BAUTEIL**
HEAVILY THERMALLY STRESSABLE COMPONENT
ELEMENT A HAUTE RESISTANCE THERMIQUE

(30) Priorität: 14.09.1993 AT 1848/93
(43) Veröffentlichungstag der Anmeldung: 06.09.1995
(73) Patentinhaber: PLANSEE Aktiengesellschaft, 6600 Reutte, Tirol (AT)
(72) Erfinder: GRILL, Robert, A-6600 Reutte (AT); REHEIS, Nikolaus, A-6474 Jerzens 10 (AT); WITWER, Michael, A-6706 Bürs (AT)
(74) Vertreter: Lohnert, Wolfgang, Dr.
(86) Internationale Anmeldenummer: EP9403013
(87) Internationale Veröffentlichungsnummer: WO9507869

(56) Entgegenhaltungen:
- EP-A- 0 038 072
- EP-A- 0 111 989
- EP-A- 0 353 820
- GB-A- 837 349
- US-A- 3 284 174
- US-A- 3 713 790
- DATABASE WPI Section Ch, Week 8905, 19. Dezember 1988 Derwent Publications Ltd., London, GB; Class L02, AN 89-036733 & JP,A,63 310 778 (SUMITOMO ELEC. IND. KK) 19. Dezember 1988 in der Anmeldung erwähnt

## Beschreibung

Die Erfindung betrifft ein thermisch hoch belastbares Bauteil, bestehend aus mindestens einem Graphitteil und mindestens einem Metallteil, die durch eine Lotschicht miteinander verbunden sind, wobei zwischen dem Metallteil und dem Lot eine Zwischenschicht angeordnet ist.

Graphit ist aufgrund seiner speziellen Eigenschaften, wie hohe thermische Belastbarkeit, gute Wärmeleitfähigkeit und geringe Zerstäubungsrate, für Bauteile, die thermisch stark beansprucht werden, gut geeignet. Der Graphit kommt dabei in den unterschiedlichsten Formen, wie als polykristalliner Graphit, als pyrolitischer Graphit oder auch als faserverstärkter Graphit zum Einsatz. Nachteilig bei Graphit ist, daß er selbst in der faserverstärkten Form nur eine beschränkte mechanische Festigkeit und Duktilität aufweist. Aus diesem Grund kommt Graphit in vielen Fällen nur als Werkstoffverbund zusammen mit Metallen zum Einsatz, um allen Anforderungen an die spezielle Verwendung gerecht werden zu können.

Es ist bekannt, Graphit mit geeigneten metallischen Werkstoffen, wie beispielsweise Kupfer, Inconel, Molybdän oder TZM, zu verlöten. Geeignete Lote sind beispielsweise Legierungen der Elemente Ag, Cu, Ni, Pt, Ti, Zr, Cr mit Anteilen an Kupfer und Titan. Die Lötung erfolgt im Vakuum je nach Zusammensetzung des Lotes bei Temperaturen zwischen 850 und 1900°C.

Werkstoffverbunde Graphit/Metall haben sich als aktiv gekühlte Hitzeschilde, z. B. bei der Herstellung von Bauteilen der "Ersten Wand" oder von Divertoren und Limitern bei Fusionsreaktoren bewährt. Dort ist der Graphitteil mit den Kühlrohren, z. B. aus Kupfer oder Molybdän, verlötet.

Problematisch bei allen gelöteten Werkstoffverbunden aus Graphit und Metallen ist der große unterschiedliche thermische Ausdehnungskoeffizient, der zu einer enormen Belastung der Lötverbindung zwischen den unterschiedlichen Materialien führt. Insbesondere bei einer zyklischen thermischen Belastung hält die Lötverbindung den dadurch auftretenden, wechselnden mechanischen Beanspruchungen in vielen Fällen nicht mehr stand und es kommt zu starken Verformungen, Materialrissen oder sogar zu einer kompletten Zerstörung des Bauteiles.

In der Vergangenheit hat es daher nicht an Versuchen gefehlt, die unterschiedlichen Wärmeausdehnungen von Graphit und Metallen bei gelöteten Werkstoffverbunden dieser Materialien durch Einfügen einer Zwischenschicht besser anzugleichen bzw. die auftretenden mechanischen Spannungen abzubauen.
Die JP 63-310778 beschreibt beispielsweise einen durch Löten hergestellten Werkstoffverbund für Hochtemperatur-Anwendungen aus Graphit und Metall, bei dem zum Abbau der mechanischen Spannungen im Werkstoffverbund eine einlagige Zwischenschicht aus Nickel vorgesehen ist.

Die AT-B-393 651 beschreibt einen hochtemperaturbeständigen Verbundkörper aus einem Graphitteil und einem Teil aus Molybdän oder einer Molybdänlegierung, die durch ein Zirkonlot miteinander verbunden sind, wobei zwischen dem Molybdänteil und dem Lot eine zweilagige Zwischenschicht aus Vanadium und Wolfram oder Tantal oder Niob angeordnet ist. Durch die Zwischenschicht soll die Eutektikumsbildung zwischen Molybdän und Zirkonlot, welche die maximal zulässige Einsatztemperatur des Verbundkörpers herabsetzen würde, vermieden werden.

Die DE-A1-2527326 beschreibt ein Schaltstück für Hochspannungs-Leistungsschalter, bei dem die Oberfläche des Schaltstückes aus einem hochschmelzenden Metall mit einer Lichtbogenelektrode aus Graphit, über eine wenigstens ein karbidbildendes Metall enthaltende Lotschicht, verbunden ist. Wahlweise kann zwischen der Graphitelektrode und der Lotschicht eine Zwischenschicht aus einem karbidbildenden Metall, z.B. Chrom, angeordnet sein. Auf diese Weise soll die Benetzung des Graphits und damit die Festigkeit der Lotverbindung verbessert werden. Darüberhinaus soll durch eine derartige Zwischenschicht eine störende Diffusion von Kohlenstoff aus dem Graphit in das Lotmaterial weitgehend verhindert werden.

Die EP 0 296 942 beschreibt ebenfalls einen derartigen Werkstoffverbund für Hochtemperatur-Anwendungen, bei dem zwischen den zu verbindenden Teilen eine Folie aus einem hochschmelzenden Metall, wie Mo, Ta, Hf, Zr, Nb oder W und deren Legierungen sowie eine Folie aus Cu, Ti oder Ni und deren Legierungen angeordnet wird. Das Lotmaterial wird jeweils zwischen den zu verbindenden Teilen und den Folien und zwischen den beiden Folien selbst angeordnet. Diese Art der Verbindung ergibt Bauteile, die bei gleichmäßigen, thermischen Beanspruchungen eine gute Verbindung der Materialien Graphit und Metall ermöglicht. Bei stark zyklischen thermischen Beanspruchungen, die u.a. bei Kühlelementen für Fusionsreaktoren auftreten, ist diese Art der Verbindung jedoch nicht mehr optimal und es kann zu Spannungsrissen im Material bzw. zum Ausfall der gesamten Bauteile kommen.

Die Aufgabe der vorliegenden Erfindung besteht daher darin, Bauteile aus einem Werkstoffverbund aus Graphit und Metall zu schaffen, die thermisch hoch belastbar sind und insbesondere auch bei einer stark zyklischen thermischen Beanspruchung eine hervorragende Verbindung der einzelnen Teile gewährleistet.

Erfindungsgemäß wird dies dadurch erreicht, daß die Zwischenschicht im wesentlichen aus Chrom oder aus einer wesentliche Anteile an Chrom enthaltenden Legierung mit Kupfer- und/oder Nickelzusätzen besteht. Durch Verwendung dieser Werkstoffe als Material für die Zwischenschicht wird erreicht, daß selbst bei höchsten thermischen, zyklischen Beanspruchungen die gute Verbindung der Werkstoffe Graphit und Metall erhalten bleibt, ohne daß es zu Materialrissen kommt, selbst bei einer Beanspruchung mit weit über 1000 Zyklen.

Die Aufbringung der Zwischenschicht auf das Metallteil erfolgt durch einfache Verfahren, wie Plasmaspritzen oder die HIP-Behandlung einer als Pulvermischung aufgebrachten Schicht. Auch die Aufbringung der Zwischenschicht als Blech oder Rohr hat sich bewährt.

Gut geeignet sind Zwischenschichten, die aus einer homogenen, zweiphasigen Legierung mit mindestens 20 Gew.% Chrom, insbesondere 25 Gew.% Chrom, Rest im wesentlichen Kupfer oder aus einer homogenen Legierung mit mindestens 45 Gew.% Chrom, insbesondere 50 Gew.% Chrom, Rest im wesentlichen Nickel bestehen.

Besonders vorteilhaft ist es, wenn die Zwischenschicht einen gradierten Aufbau hat, d.h. wenn die aus Kupfer und Chrom bzw. Nickel und Chrom bestehende Zwischenschicht sich in ihrem Aufbau ändert, und zwar von einer Zone aus reinem Kupfer oder Nickel auf der an das Metallteil angrenzenden Seite unter ständiger Vergrößerung des Chromanteiles bis zu einer reinen Chromzone auf der anderen Seite, die mit dem Lot in Verbindung steht.

Als vorteilhaft hat es sich herausgestellt, wenn die Zwischenschicht eine Schichtstärke zwischen 0,5 mm und 2 mm aufweist.

Für das Graphitteil hat sich insbesondere faserverstärkter Graphit bewährt, während für das Metallteil Kupfer bzw. Kupferlegierungen und Stahl, aber auch Wolfram-Kupfer- oder Molybdän-Kupfer-Verbundwerkstoffe hervorragend geeignet sind. Die Legierung 70 Ag 27 Cu 3 Ti hat sich für obigen Werkstoffverbund als besonders geeignetes Lotmaterial empfohlen.

Im folgenden wird die Erfindung anhand von Herstellungsbeispielen näher erläutert.

### BEISPIEL 1

Eine Divertorprobe für Fusionsreaktoren nach dem "Monoblock-Design" wurde wie folgt hergestellt:
Ein Cu-Rohr mit einem Außendurchmesser von 16 mm, einem Innendurchmesser von 14 mm und 200 mm Länge wurde auf der äußeren Mantelfläche sandgestrahlt, Ultraschall-gereinigt und in verdünnter Salpetersäure gebeizt. Eine 2 mm dicke Zwischenschicht aus einer 50 % Chrom und 50 % Kupfer enthaltenden Legierung wurde durch ein Vakuum-Plasmaspritzverfahren unter den dazu üblichen, auf die spezielle Legierung angepaßten Spritzbedingungen auf die äußere Mantelfläche des Cu-Rohres aufgebracht.
Anschließend wurde die beschichtete Rohroberfläche auf eine Toleranz von + 0,02 mm überschliffen.
Das derart vorbereitete Cu-Rohr wurde in ein prismatisches Graphitteil mit den Abmessungen 36 x 44 x 160 mm in eine zentrische Bohrung mit 20 mm Durchmesser eingebracht und unter Verwendung eines Lotmateriales mit der Zusammensetzung 70 Ag 27 Cu 3 Ti bei 860°C im Hochvakuumofen verlötet.

Das derart hergestellte Bauteil wurde einem thermomechanischen, zyklischen Belastungstest unterzogen. Während einer Aufheizzeit von 1 min wurde das Bauteil im Hochvakuum auf 600°C aufgeheizt und danach während 15 min auf Raumtemperatur abgekühlt. Nach 100 Zyklen zeigte eine zerstörungsfreie und eine zerstörende Prüfung des Bauteiles den einwandfreien Zustand der Lötverbindung.

### BEISPIEL 2

Eine Divertorplatte für Fusionsreaktoren nach dem "Flat-tile-Design" wurde wie folgt hergestellt:
Ein Vierkantstab aus Stahl AISI 316 L mit 21 mm Kantmaß, 150 mm Länge und einer zentrischen Bohrung von 14 mm Durchmesser wurde an der Oberfläche abgefräst, um eine Rauhtiefe Rₐ von etwa 1,6 µm und eine Ebenheit von < 0,05 mm zu erreichen. Auf eine Seite des Vierkantrohres wurde ein deckungsgleicher Blechstreifen von 2 mm Stärke aus einem Blech einer 50 Chrom 50 Nickel-Legierung aufgebracht. Die Oberfläche des Bleches wurde vorher überschliffen. Danach wurden 4 Stück 10 mm starke, rechteckige Graphitblöcke in CFC-Qualität im Hochvakuum bei 1100°C 10⁻⁵ mbar während 60 min entgast. Unter Verwendung einer Lötfolie aus 70 Ag 27 Cu 3 Ti wurden die Graphitblöcke deckungsgleich unmittelbar aneinanderstoßend auf dem Blech aus der 50 Chrom 50 Nickel-Legierung aufgebracht und der Verbund im Hochvakuumofen bei 860°C verlötet.
Das Bauteil wurde derselben zyklischen Belastung wie das nach Beispiel 1 hergestellte Bauteil unterzogen. Auch hier zeigten eine zerstörungsfreie und eine zerstörende Prüfung des Bauteiles den einwandfreien Zustand der Lötverbindung.

## Patentansprüche

1. Thermisch hoch belastbares Bauteil, bestehend aus mindestens einem Graphitteil und mindestens einem Metallteil, die durch eine Lotschicht miteinander verbunden sind, wobei zwischen dem Metallteil und dem Lot eine Zwischenschicht angeordnet ist,
**dadurch gekennzeichnet**,
daß die Zwischenschicht aus Chrom oder aus einer wesentliche Anteile an Chrom enthaltenden Legierung mit Kupfer- und/oder Nickelzusätzen besteht.

2. Thermisch hoch belastbares Bauteil nach Anspruch 1, dadurch gekennzeichnet, daß die Zwischenschicht aus einer homogenen, zweiphasigen Kupferchrom-Legierung mit mindestens 20 Gew.% Chrom, Rest im wesentlichen Kupfer besteht.

3. Thermisch hoch belastbares Bauteil nach Anspruch 2, dadurch gekennzeichnet, daß die Legierung aus 25 Gew.% Chrom, Rest im wesentlichen Kupfer besteht.

4. Thermisch hoch belastbares Bauteil nach Anspruch 1, dadurch gekennzeichnet, daß die Zwischenschicht aus einer homogenen, zweiphasigen Nickelchrom-Legierung mit mindestens 45 Gew.% Chrom, Rest im wesentlichen Nickel besteht.

5. Thermisch hoch belastbares Bauteil nach Anspruch 4, dadurch gekennzeichnet, daß die Legierung aus 50 Gew.% Chrom, Rest im wesentlichen Nickel besteht.

6. Thermisch hoch belastbares Bauteil nach Anspruch 1, dadurch gekennzeichnet, daß die Zwischenschicht einen gradierten Aufbau derart hat, daß sie von einer Zone aus reinem Kupfer auf der Seite des Metallteiles unter Zunahme des Chrom-Gehaltes in eine reine Chromzone auf der Seite, die mit dem Lot in Verbindung steht, wechselt.

7. Thermisch hoch belastbares Bauteil nach Anspruch 1, dadurch gekennzeichnet, daß die Zwischenschicht einen gradierten Aufbau derart hat, daß sie von einer Zone aus reinem Nickel auf der Seite des Metallteiles unter Zunahme des Chrom-Gehaltes in eine reine Chromzone auf der Seite, die mit dem Lot in Verbindung steht, wechselt.

8. Thermisch hoch belastbares Bauteil nach einem der Ansprüche 1 bis 7, dadurch gekennzeichnet, daß die Zwischenschicht eine Dicke zwischen 0,5 und 2 mm aufweist.

9. Thermisch hoch belastbares Bauteil nach einem der Ansprüche 1 bis 8, dadurch gekennzeichnet, daß das Graphitteil aus faserverstärktem Graphit und das Metallteil aus Kupfer bzw. einer Kupferlegierung oder Stahl besteht.

10. Thermisch hoch belastbares Bauteil nach Anspruch 9, dadurch gekennzeichnet, daß das Lot die Materialzusammensetzung 70 Ag 27 Cu 3 Ti aufweist.

11. Thermisch hoch belastbares Bauteil nach einem der Ansprüche 1 bis 8, dadurch gekennzeichnet, daß das Metallteil aus einem Wolfram-Kupfer- oder Molybdän-Kupfer-Verbundwerkstoff besteht.

## Claims

1. Thermally highly stable component, comprising at least one graphite part and at least one metal part which are joined to one another by a solder layer, an intermediate layer being disposed between the metal part and the solder,
characterized in
that the intermediate layer comprises chromium or an alloy containing substantial proportions of chromium with copper and/or nickel admixtures.

2. Thermally highly stable component according to claim 1, characterized in that the intermediate layer comprises a homogeneous, two-phase copper-chromium alloy having at least 20% by weight of chromium, the remainder being substantially copper.

3. Thermally highly stable component according to claim 2, characterized in that the alloy comprises 25% by weight of chromium, the remainder being substantially copper.

4. Thermally highly stable component according to claim 1, characterized in that the intermediate layer comprises a homogeneous, two-phase nickel-chromium alloy having at least 45% by weight of chromium, the remainder being substantially nickel.

5. Thermally highly stable component according to claim 4, characterized in that the alloy comprises 50% by weight of chromium, the remainder being substantially nickel.

6. Thermally stable component according to claim 1, characterized in that the intermediate layer has a graduated structure such that it changes from a zone of pure copper at the side of the metal part with an increase in the chromium content into a zone of pure chromium at the side which is joined to the solder.

7. Thermally highly stable component according to claim 1, characterized in that the intermediate layer has a graduated structure such that it changes from a zone of pure nickel at the side of the metal part with an increase in the chromium content into a zone of pure chromium at the side which is joined to the solder.

8. Thermally highly stable component according to one of claims 1 to 7, characterized in that the intermediate layer has a thickness between 0.5 and 2 mm.

9. Thermally highly stable component according to one of claims 1 to 8, characterized in that the graphite part is made of fibre-reinforced graphite and the metal part is made of copper or a copper alloy or steel.

10. Thermally highly stable component according to claim 9, characterized in that the solder has the material composition 70 Ag 27 Cu 3 Ti.

11. Thermally highly stable component according to one of claims 1 to 8, characterized in that the metal part comprises a tungsten-copper or molybdenum-copper composite structure.

## Revendications

1. Elément à haute résistance thermique qui se compose d'au moins une partie en graphite et d'au moins une partie métallique qui sont reliées entre elles par une couche de brasure, une couche intermédiaire étant agencée entre la partie métallique et la brasure, caractérisé en ce que la couche intermédiaire se compose de chrome ou d'un alliage contenant de fortes proportions de chrome et des additions de cuivre et/ou de nickel.

2. Elément à haute résistance thermique selon la revendication 1, caractérisé en ce que la couche intermédiaire se compose d'un alliage homogène chrome-cuivre, à deux phases, à teneur en chrome d'au moins 20 % en poids, le solde consistant essentiellement en cuivre.

3. Elément à haute résistance thermique selon la revendication 2, caractérisé en ce que l'alliage se compose de 25 % en poids de chrome, le solde consistant essentiellement en cuivre.

4. Elément à haute résistance thermique selon la revendication 1, caractérisé en ce que la couche intermédiaire se compose d'un alliage homogène chrome-nickel, à deux phases, à teneur en chrome d'au moins 45 % en poids, le solde consistant essentiellement en nickel.

5. Elément à haute résistance thermique selon la revendication 4, caractérisé en ce que l'alliage se compose de 50 % en poids de chrome, le solde consistant essentiellement en nickel.

6. Elément à haute résistance thermique selon la revendication 1, caractérisé en ce que la structure de la couche intermédiaire varie progressivement en passant, en élevant la teneur en chrome, d'une zone de cuivre pur sur le côté de la partie métallique à une zone de chrome pur sur le côté qui est en liaison avec la brasure.

7. Elément à haute résistance thermique selon la revendication 1, caractérisé en ce que la structure de la couche intermédiaire varie progressivement en passant, en élevant la teneur en chrome, d'une zone en nickel pur sur le côté de la partie métallique à une zone de chrome pur sur le côté qui est en liaison avec la brasure.

8. Elément à haute résistance thermique selon l'une des revendications 1 à 7, caractérisé en ce que l'épaisseur de la couche intermédiaire est comprise entre 0,5 et 2 mm.

9. Elément à haute résistance thermique selon l'une des revendications 1 à 8, caractérisé en ce que la partie en graphite se compose de graphite armé de fibres et la partie métallique se compose de cuivre ou d'un alliage de cuivre ou d'acier.

10. Elément à haute résistance thermique selon la revendication 9, caractérisé en ce que la composition de matières de la brasure est 70 Ag 27 Cu 3 Ti.

11. Elément à haute résistance thermique selon l'une des revendications 1 à 8, caractérisé en ce que la partie métallique se compose d'une matière composite cuivre-tungstène ou cuivre-molybdène.
